# EUROPÄISCHE PATENTSCHRIFT

(11) **EP 1 740 404 B1**
(45) Veröffentlichungstag und Bekanntmachung des Hinweises auf die Patenterteilung: **06.10.2010**
(21) Anmeldenummer: 05716115.0
(22) Anmeldetag: 16.03.2005
(51) Int. Cl.: B60J 5/04

(54) **VORRICHTUNG ZUR ERHÖHUNG DES INSASSENSCHUTZES IN EINEM FAHRZEUG BEI EINEM SEITENAUFPRALL**
DEVICE FOR INCREASING THE DEGREE OF OCCUPANT PROTECTION IN A VEHICLE DURING A SIDE IMPACT
DISPOSITIF POUR ACCROITRE LA PROTECTION D'OCCUPANTS DANS UN VEHICULE EN CAS DE COLLISION LATERALE

(30) Priorität: 26.04.2004 DE 102004020471
(43) Veröffentlichungstag der Anmeldung: 10.01.2007
(73) Patentinhaber: Fraunhofer-Gesellschaft zur Förderung der angewandten Forschung e.V., 80686 München (DE); Faurecia Innenraumsysteme GmbH, 76767 Hagenbach (DE)
(72) Erfinder: MELZ, Tobias, 64285 Darmstadt (DE); ZIMMERMAN, Eric, 34125 Kassel (DE)
(74) Vertreter: Rösler, Uwe
(86) Internationale Anmeldenummer: PCT/EP2005/002796
(87) Internationale Veröffentlichungsnummer: WO 2005/102752

(56) Entgegenhaltungen:
- EP-A- 0 985 569
- US-A- 5 348 365
- PATENT ABSTRACTS OF JAPAN Bd. 1999, Nr. 09, 30. Juli 1999 (1999-07-30) -& JP 11 099828 A (NISSAN MOTOR CO LTD), 13. April 1999 (1999-04-13)
- PATENT ABSTRACTS OF JAPAN Bd. 018, Nr. 154 (M-1577), 15. März 1994 (1994-03-15) & JP 05 330342 A (NIPPON STEEL CORP), 14. Dezember 1993 (1993-12-14)

## Beschreibung

### Technisches Gebiet

Die Erfindung bezieht sich auf eine Vorrichtung für ein Kraftfahrzeug zum Insassenschutz bei einem seitlich auf einen Türbereich des Kraftfahrzeuges einwirkenden Energieeintrag, wobei sich ein Fahrzeugsitz auf der dem Energieeintrag abgewandten Seite der Kraftfahrzeugtür befindet, die wenigstens einen die Kraftfahrzeugtür innenliegend durchragenden Seitenaufprallträger vorsieht, wobei der Seitenaufprallträger in Längserstreckung wenigstens zwei jeweils über einen Fügebereich miteinander verbundene Bereiche aufweist.

### Stand der Technik

Der Insassenschutz bei Kraftfahrzeugen gilt als eines der Hauptaufgaben bei der Konstruktion und Neuentwicklung von Kraftfahrzeugen. Ein eigenes Entwicklungsziel dient der Auslegung ausgeprägter Knautschzonen im Front- und Heckbereich, die die Fahrgastzelle bei Front- und Heckkollisionen weitgehend sicher zu schützen vermögen. Bei seitlichen Kollisionen hingegen bereitet der Insassenschutz aufgrund der kleinen zur Verfügung stehenden Deformationswege und des geringen Absorptionsvermögens der Seitenstruktur eines Kraftfahrzeuges größere Probleme.

Bekannte Lösungen zur Entschärfung der bei Seitenkollisionen von Kraftfahrzeugen bestehenden Gefahr für die Insassen sehen eine Versteifung der Kraftfahrzeugtür vor. So sind beispielsweise in die Kraftfahrzeugtür integrierte Profile, die in Fahrzeugquerrichtung eine hohe Steifigkeit und/oder ein hohes Energieaufnahmevermögen besitzen, bekannt. Beispielsweise geht aus der DE 196 33 637 A1 eine Fahrzeugtür mit Seitenaufprallschutz hervor, in deren Türrahmen bogenförmig ausgebildete Haltestangen vorgesehen sind, die im Kollisionsfall derart verdreht und unter Zugbelastung gleichsam der Wirkung eines Fangnetzes deformiert werden.

Eine derartige Versteifung der Seitentüren durch Vorsehen entsprechender Längsträger ist jedoch in schwerwiegenden Kollisionsfällen nicht ausreichend zur Sicherung der Insassen, da bei einer äußeren Krafteinwirkung auf die Seitentür diese durch den Türausschnitt der Fahrzeugkarosserie durchgedrückt wird, so dass der Überlebensraum der Insassen drastisch eingeengt und die Überlebenschancen in gleicher Weise reduziert werden.

Der Stand der Technik kennt überdies eine Reihe von Maßnahmen, die geeignet sind, auf die Seitentür einwirkende Kräfte auf die Fahrzeugkarosserie zu übertragen. Beispielsweise durch entsprechend große Überlappung zwischen Tür und Türausschnitt oder durch aus dem Rand der Tür herausragende Bolzen, die im Kollisionsfall in verstärkte Aussparungen des Türausschnittes der Kfz-Karosserie eingreifen. So geht aus der DE-AS 22 15 674 eine für eine Kfz-Tür vorgesehene Verstärkungseinrichtung hervor, die im wesentlichen aus einem nach außen gewölbten Träger besteht, dessen Endabschnitte bei einer durch einen äußeren Aufprall bewirkten Deformation des Trägers in eine gestreckte Form in entsprechend stabile Ausnehmungen innerhalb des Türrahmens eindringen. Der Träger besteht vorzugsweise aus profiliertem Stahlblech, das durch Walzen in entsprechende Form gebracht wird.

Zur Vermeidung eines durch die vorstehenden Maßnahmen bedingte Zunahme des Eigengewichtes des Kraftfahrzeuges wird in der DE 41 25 299 C2 eine für eine Kfz-Tür vorgesehene Verstärkungseinrichtung beschrieben, die aus Gründen der Gewichtsreduzierung aus einer, aus faserverstärktem Verbundwerkstoff gefertigten bogenförmig geformten Verstärkungsträgereinrichtung besteht. Auch in diesem Fall befindet sich die Verstärkungsvorrichtung vollständig innerhalb der Tür, die lediglich im Kollisionsfall aufgrund der einhergehenden Deformation des Verstärkungsträgers beidseitig mit den Endbereichen aus der Tür hervortritt, die ihrerseits wiederum mit stabilen Abstützflanken im Türrahmen der Kfz-Karosserie in Wirkverbindung treten.

Der DE 198 32 076 A1 ist eine Versteifung für einen Türbereich eines Kraftfahrzeuges zu entnehmen, mit einem die Kraftfahrzeugtür horizontal durchragenden Seitenaufprallträger, der mittig eine Gelenkverbindung vorsieht, mittels der die Länge des Seitenaufprallträgers änderbar ist. Im normalen crashfreien Betrieb verharrt die Gelenkverbindung in einer abgewinkelten Stellung, bei der der Seitenaufprallträger verkürzt innerhalb der Kraftfahrzeugtür verbleibt. Im Crashfall hingegen wird die Gelenkverbindung mittels eines pyrotechnischen Aktors betätigt, wodurch der Seitenaufprallträger in einen gestreckten Zustand überführt wird, in dem der Seitenaufprallträger beidseitig die Kraftfahrzeugtür überragt und in die angrenzen den stabilen Karosseriebereichen einmündet.

Aus der JP 11 099828 A ist ein aus mehreren Teilen bestehendes Verstärkungselement für eine Kraftfahrzeugtür zu entnehmen. Die einzelnen stangenartig ausgebildeten Teile reihen sich über Gelenkeinheiten jeweils miteinander verbunden zu einem die Kraftfahrzeugtür durchragenden Stangeneinheit, die bei einer äußeren Krafteinwirkung durch kontrolliertes Abknicken im Bereich der Gelenke den auf die Kraftfahrzeugtür einwirkenden Krafteintrag in stabilere Karosseriebereiche umzuleiten vermag.

### Darstellung der Erfindung

Der Erfindung liegt die Aufgabe zugrunde, ein den Insassenschutz optimierendes Sicherheitssystem anzugeben, das im Falle eines Seitenaufpralls einen erhöhten Insassenschutz zu bieten vermag. Insbesondere gilt es, das Sicherheitssystem dahingehend zu verbessern, dass die im Kollisionsfall seitlich auf eine Kraftfahrzeugtür einwirkende Deformationsenergie gezielt und gesichert aus dem Bereich der Kraftfahrzeugtür weggeleitet wird, wobei besonderen Wert darauf gelegt werden soll den Insassenraum während und nach der Einwirkung der Kollisionsenergie auf die Kraftfahrzeugtür möglichst nicht oder nur in einem geringen Masse zu beeinträchtigen. Ziel sollte es auch sein den seitlichen Knautschzonenbereich während der Kollision zu vergrößern.

Die Lösung der der Erfindung zugrunde liegenden Aufgabe ist im Anspruch 1 angegeben. Den Erfindungsgedanken vorteilhaft weiterbildende Merkmale sind Gegenstand der Unteransprüche sowie der Beschreibung insbesondere unter Bezugnahme auf die Ausführungsbeispiele zu entnehmen.

Eine Vorrichtung gemäß den Merkmalen des Oberbegriffes des Anspruches 1 ist erfindungsgemäß derart ausgebildet, dass der Seitenaufprallträger in Längserstreckung wenigstens zwei jeweils über einen Fügebereich miteinander verbundene Bereiche aufweist, wobei der Fügebereich über eine einstellbare Biegesteifigkeit in Bezug zur Längserstreckung des Seitenaufprallträgers verfügt, die in Abhängigkeit des auf die Kraftfahrzeugtür einwirkenden Energieeintrages variabel oder diskret änderbar ist. Dabei weist der Fügebereich wenigstens eine intelligente Struktur auf, die auf der Grundlage wenigstens eines Wandlerwerkstoffes durch externe Energiezufuhr die Biegesteifigkeit des Fügebereiches veränderbar ist.

Grundsätzlich weist_der Seitenaufprallträger vorzugsweise drei oder mehr in Längserstreckung des Trägers aneinander grenzende diskrete Seitenaufprallträgerbereiche auf, die jeweils aus robustem stangen- oder plattenförmigen Material bestehen und von denen jeweils zwei unmittelbar aneinandergrenzende Seitenaufprallträgerbereiche durch eine Art Gelenkverbindung miteinander verbunden sind. Die als Gelenkverbindung ausgebildeten Fügebereiche stellen sog. Sollknickstellen oder -bereiche dar, längs der der Seitenaufprallträger bei Energieeinwirkung im Kollisionsfall geknickt wird und dies unter Vorgabe jeweils geeignet einstellbarer Kraftmomente, die es zum Abknicken der einzelnen Fügebereiche zu überwinden gilt.

Durch Vorsehen mehrerer, derartig ausgebildeter Fügebereiche ist es möglich, einen im Kollisionsfall auf die Kraftfahrzeugtür einwirkenden Energieeintrag, der bspw. in einem Bereich auf die Kraftfahrzeugtür einwirkt, auf deren abgewandten Seite sich unmittelbar der Oberkörper eines Insassen befindet und somit nur ein geringer Knautschzonenbereich zwischen Kraftfahrzeugtürinnenwand und Oberkörper des Insassen besteht, gezielt in jene Bereiche in der Kraftfahrzeugtür umzuleiten, durch deren Deformation der Insasse nicht oder nur in einem geringen Umfang in Mitleidenschaft gezogen wird. Gelingt es in diesem Fall die Kollisionsenergie in Bereiche der Kraftfahrzeugtür umzuleiten, die nahe dem Fußraum liegen, so hilft dies in entscheidendem Maße zum Insassenschutz beim Seitenaufprall, zumal in diesem Bereich eine weit größere Knautschzone besteht als im Oberkörper nahen Türbereich.

Zur Realisierung einer derartigen Kollisionsenergieumleitung gilt es alle über jeweils einen Fügebereich miteinander verbundenen Seitenaufprallträgerbereiche in einem Ausgangszustand bzw. Grundzustand mit einer möglichst großen Biegesteifigkeit miteinander zu verbinden. Ausschließlich im Kollisionsfall wird die Biegesteifigkeit aller oder bestimmt ausgewählter Fügebereiche gezielt reduziert, um in Abhängigkeit von Stärke und Richtung der auf die Kraftfahrzeugtür einwirkenden Kollisionsenergie bestimmte Bereiche des Seitenaufprallträgers kontrolliert um die Fügebereiche ab- bzw. einknicken zu lassen. Im vorstehend geschilderten Fall eines hauptsächlich im Bereich des Insassenoberkörpers auf die Kraftfahrzeugtür einwirkenden Energieeintrages verbleiben jene im Oberkörperbereich befindlichen Fügebereiche auch während der Kollision möglichst steif, wohingegen die Fügebereiche nahe des Fußraums zum gezielten Abknicken eine reduzierte Biegesteifigkeit erfahren. Anders gelagerte Seitenaufprallsituationen können entsprechend andere Abknickprofile längs des erfindungsgemäß ausgebildeten Seitenaufprallträgers hervorrufen.

Wie bereits vorstehend erwähnt sieht eine bevorzugte Ausbildungsform eines jeweiligen Fügebereiches eine Art Gelenkverbindung vor, bei der zwei aneinandergrenzende Seitenaufprallträgerbereiche vorzugsweise um eine senkrecht zur Längserstreckung des Seitenaufprallträgers orientierte Gelenkachse mit einer vorgebbaren Drehbeweglichkeit um die Gelenkachse verschwenkbar sind. Hinsichtlich einer diesbezüglichen vorteilhaften Ausbildungsform wird im Weiteren unter Bezugnahme auf ein Ausführungsbeispiel detailliert eingegangen. Lösungsgemäß ist der Einsatz eines geeignet gewählten und konfektionierten Wandlerstoffes im Fügebereich, der bei gezielter und geeigneter Energiezufuhr im Wege intrinsischer Gefügeänderungen seine Form- und/oder Stabilitätseigenschaften verändert. So wäre es denkbar einen stangen- oder plattenförmig ausgebildeten Seitenaufprallträger auszubilden, der wenigstens innerhalb der Fügebereiche derartige Wandlerwerkstoffe aufweist oder aus diesen besteht, die über die geforderten mechanischen Eigenschaften verfügen. Derartige Wandlerstoffe sind Materialien aus einer der nachfolgenden Werkstoffklassen: Piezo-Keramik, Piezo-Polymer, elektrostriktive Keramik, elektroreologische Fluide, Polymergel, magnetoreologisches Fluide, Formgedächtnismetalle oder -legierungen sowie Formgedächtnispolymere. Mit Hilfe derartiger als Wandlerwerkstoffe ausgebildeten Fügebereiche ist es möglich ihre Biegesteifigkeit längs des Seitenaufprallträgers sowie ihre Dämpfungseigenschaften gezielt einzustellen und ggf. durch Zufuhr externer Energie, bspw. im Wege elektrischer, thermischer oder mechanischer Energiezufuhr, zu steuern. Denkbar wäre in diesem Zusammenhang ein einstückiger stangen- oder plattenartig ausgebildeter Seitenaufprallträger, der vollständig oder nur in den Fügebereichen aus einem derartig ausgewählten Wandlerwerkstoff besteht und durch eine gezielt hervorgerufene, begrenzt in den Fügebereichen wirkende Werkstoffwandlung eine lokale Reduzierung der Biegesteifigkeit erfahren, obgleich die Längsstabilität in den übrigen Bereiche des Seitenaufprallträgers unverändert bleibt.

Eine weitere bevorzugte Ausführungsform des erfindungsgemäß ausgebildeten Seitenaufprallträgers sieht das Vorsehen geeigneter Vorspannmittel jeweils im Fügebereich vor, durch die der Seitenaufprallträger in einem Zustand reduzierter Biegesteifigkeit innerhalb der jeweiligen Fügebereiche eine geometrische Form annimmt, die sich konvexartig vom Insassenbereich beabstandet, um auf diese Weise eine für den Insassen vergrößerte Knautschzone zu schaffen. Ein derartiges Vorspannen der jeweiligen Fügebereiche ist insbesondere in Kombination mit einem am Kraftfahrzeug angebrachten Annäherungssensorsystem vorteilhaft, durch das eine kurz bevorstehende Kollisionssituation erkannt werden kann. In einem derartigen zeitlich kurz bevorstehenden und als unvermeidbar erkannten Kollisionsfall wird die Biegesteifigkeit in allen oder in speziell ausgewählten Fügebereichen, je nach erkannter Kollisionssituation, durch externe Energieversorgung, die mittels einer im Kraftfahrzeug mitgeführten Energiequelle bereitgestellt wird, gezielt herabgesetzt, wodurch die Vorspannmittel wirksam den gesamten Seitenaufprallträger oder nur bestimmte Abschnitte des Seitenaufprallträgers in eine vom Insassen weg gerichtete konvex geformte Form überführen. Im kurz darauf folgenden Zeitpunkt des kollisionsbedingten Energieeintrages versteifen gezielt jene Fügebereiche aus denen es gilt den Energieeintrag gezielt abzuleiten.

In vorteilhafter Weise weist der Seitenaufprallträger darüber hinaus an seinen beiden Endbereichen, die jeweils im Randbereich der Kraftfahrzeugtür innen- und gegenüberliegend angeordnet sind, Verriegelungsmechanismen auf, über die der Seitenaufprallträger zumindest im Kollisionsfall mit stabilen Karosseriebereichen, vorzugsweise längs der A-, B- oder C-Säule in eine lösbar feste Wirkverbindung tritt, um die mechanische Zugbelastbarkeit des Seitenaufprallträgers zu verbessern. Derartige aktive Verriegelungs- bzw. Entriegelungsmechanismen sind mit Hilfe geeignet konfektionierter Wandlerwerkstoffe, vorzugsweise Formgedächtnislegierungen realisierbar, wodurch eine mechanische Ankopplung jeweils der Endbereiche des Seitenaufprallträgers mit stabilen Karosseriebereichen möglich wird.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a, b: Drauf- und Seitensichtdarstellung eines zwischen A- und B-Säule vorgesehenen Seitenaufprallträgers,
- Fig. 2: Ausführungsbeispiel für einen Fügebereich,
- Fig. 3a - d: Darstellung unterschiedlicher Deformationen längs des Seitenaufprallträgers, und
- Fig. 4: Prinzipskizze der Anordnung eines Seitenaufprallträgers innerhalb einer Kraftfahrzeugtür.

### Wege zur Ausführung der Erfindung, gewerbliche Verwendbarkeit

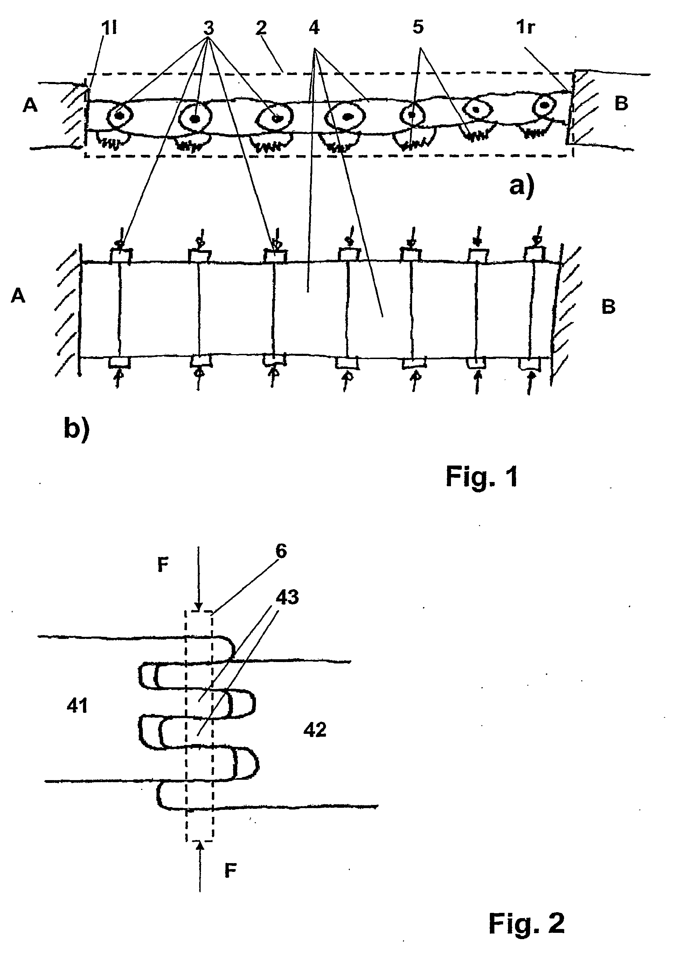

Figur 1a zeigt eine stark schematisierte Draufsichtdarstellung eines zwischen A- und B-Säule eines nicht weiter dargestellten Kraftfahrzeuges eingebrachten Seitenaufprallträgers 1, dessen zwei sich gegenüberliegenden Endbereiche 1l und 1r r über einen lösbar festen Verriegelungsmechanismus jeweils mit der A- bzw. B-Säule des Kraftfahrzeuges fest verriegelbar sind. Der Seitenaufprallträger 1 ist innenliegend innerhalb einer gestrichelt angedeuteten Kraftfahrzeugtür 2, für den Insassen von außen nicht sichtbar, angeordnet.

Der Seitenaufprallträger 1 weist im dargestellten Ausführungsbeispiel eine Vielzahl jeweils über Gelenkverbindungen 3 miteinander verbundene Seitenaufprallträgerbereiche 4 auf, die über die jeweiligen Gelenkverbindungen kettenartig miteinander verbunden sind. Die einzelnen Seitenaufprallträgerbereiche 4 sind vorzugsweise aus Gründen einer Gewichtsreduzierung aus stabilen eigensteifen faserverstärkten Kunststoffplatten gefertigt, können jedoch aus beliebig anderen belastungssteifen Materialien, wie Metalle oder Leichtmetalle in Stangen- oder Plattenform ausgebildet sein. Die Seitenaufprallträgerbereiche 4 verfügen vorzugsweise über eine hohe Biegesteifigkeit, wobei die Materialwahl der Seitenaufprallträgerbereiche 4 derart vorzunehmen ist, dass selbst unter extremer kollisionsbedingter Energie- bzw. Krafteinwirkung kein Sprödbruch im Material auftritt.

Längs des Seitenaufprallträgers 1 sind die vorzugsweise in Form von Gelenkverbindungen ausgebildeten Fügebereiche 3 vorgesehen, in denen jeweils eine lokale Steifigkeitsänderung vorgenommen werden kann. Die Steifigkeitsänderung pro Fügebereich 3 kann zwischen zwei benachbarten Fügebereichen 3 in unterschiedlichem Maße vorgenommen werden, wodurch, wie die weiteren Ausführungsbeispiele zeigen werden, eine gezielte Energiedissipation bei einem durch einen Seitenaufprall auf die Kfz-Tür 2 einwirkenden Energieeintrag erzielt werden kann.

Dies erfolgt, wie im Weiteren unter Bezugnahme auf Figur 2 beschrieben wird, unter Verwendung gezielt ansteuerbarer Aktorwerkstoffe innerhalb der Fügeverbindungen, die eine individuelle Reduzierung der Biegesteifigkeit des Seitenaufprallträgers 1 ermöglichen. So verfügt der Seitenaufprallträger 1 in einem Grund- bzw. Ausgangszustand über eine maximale Biegesteifigkeit, bei der alle Fügebereiche 3 jeweils benachbart aneinander grenzender Seitenaufprallträgerbereiche 4 möglichst starr miteinander verbinden. Erst im Kollisionsfall werden in Abhängigkeit von Stärke und Richtung des auf die Kraftfahrzeugtür einwirkenden Energieeintrages einzelne oder alle Fügebereiche 3 gelockert bzw. in ihrer Biegesteifigkeit gezielt reduziert um eine zur Erhöhung des Insassenschutzes optimierte Energiedissipation längs der Kraftfahrzeugtür und des darin integrierten Seitenaufprallträgers zu ermöglichen.

Zusätzlich sind an den Fügebereichen 3 jeweils als Federelemente ausgebildete Vorspannmittel 5 vorgesehen, die die jeweiligen über jeweils einen Fügebereich 3 miteinander verbundenen Seitenaufprallträgerbereiche 4 derart vorspannen, dass der Seitenaufprallträger 1 in einem Zustand reduzierter Biegesteifigkeit eine vom Fahrzeuginnenraum konvexartig nach außen bogenartig ausgebildete Form annimmt, um auf diese Weise die zum Insassen orientierte Knautschzone zu vergrößern. Überdies verhelfen die Federelemente 5 aufgrund ihrer konstruktiv gewählten passiven mechanischen Vorspannung zur Entlastung des Seitenaufprallträgers im Falle einer Kollision selbst bei Ausfall oder nicht Ansprechen aller in den jeweiligen Fügebereichen vorgesehenen Aktoren.

In Figur 1b ist eine Seitensichtdarstellung gezeigt, die den zwischen der A- und B-Säule einer Kraftfahrzeugkarosserie beidseitig verriegelten Seitenaufprallträger 1 zeigt. Deutlich zu erkennen sind die jeweiligen, vorzugsweise aus stabilen faserverstärktem Kunststoff gefertigten Platten 4 zu sehen, die gegenseitig über Gelenkverbindungen 3 miteinander verbunden sind.

Eine mögliche Ausführungsvariante einer derartigen Gelenkverbindung ist schematisiert in Figur 2 dargestellt. Repräsentativ zu allen übrigen längs des Seitenaufprallträgers vorgesehenen Fügebereichen stellt die in Figur 2 gezeigte Reibschlussverbindung eine bevorzugte Ausführungsform einer derartigen Fügeverbindung dar. Hierzu sind die Randbereiche zweier sich jeweils gegenüberliegenden Seitenaufprallträgerbereiche 41 und 42 jeweils fingerartig, ineinander greifend ausgebildet, wobei die jeweils fingerartigen Stege 43 der Bereiche 41 und 42 von einem gestrichelt angedeuteten Durchdringungskörper 6 durchsetzt werden, der die fingerartigen Stege 43 senkrecht zur Längserstreckung des Seitenaufprallträgers 1 in der durch die Kraftvektoren F angedeuteten Richtung unter Ausbildung einer gezielt einstellbaren Klemmkraft kraftbeaufschlagt. Der Durchdringungskörper 6 ist in einer bevorzugten Ausführungsform als Schraubverbindung ausgebildet, mit einer die fingerartig ausgebildeten Stege 43 in der dargestellten Weise durchragenden Schraube, die an ihren Enden jeweils durch Muttern o.ä. gesichert ist. Zusätzlich ist die Schraube von einer Hülse aus piezoelektrischem Material umgeben, die unter Ausnutzung des piezoelektrischen Effektes längenvariabel einstellbar ist. Mit Hilfe eines derartig oder ähnlich wirkend aufgebauten Aktors kann die zwischen den fingerartig ausgebildeten Stegen 43 wirkende Reibkraft in Abhängigkeit der Länge der aus piezoelektrischem Material gefertigten Hülse variabel eingestellt werden.

Die Verwendung piezoelektrischer Werkstoffe setzt zumeist eine die Werkstofflänge variierende elektrische Spannungsquelle voraus, um den Werkstoff geeignet anzusteuern. Denkbar wäre auch der Einsatz von Wandlerwerkstoffen, die ohne externe elektrische Energiequelle eine Veränderung Ihrer Gefügestruktur herbeiführen und lediglich unter Ausnutzung der Kollisionsenergie eine gewünschte Form- oder Stabilitätsänderung initiieren. Hierfür geeignete Materialien sind beispielsweise Formgedächtnismetalle oder -legierungen.

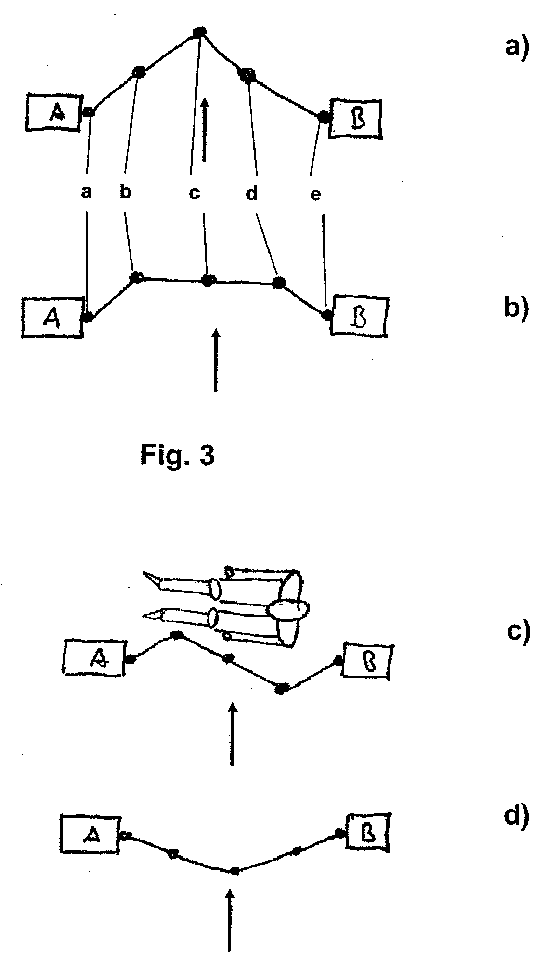

Durch die lokale Einstellbarkeit der jeweiligen Längsstabilitätt der in Figur 2 dargestellten Reibpaarung ist eine Anpassung an unterschiedliche Crashszenarien unter Vorgabe bestimmter Verformungskonturen sowie zeitlicher Verläufe für die Ausbildung entsprechender Längsverformungen des Seitenaufprallträgers möglich. So erlaubt der erfindungsgemäß ausgebildete Seitenaufprallträger durch Steuerung seiner Biegesteifigkeit lokale Deformationen, die durch lokalen Krafteintrag auf die Kraftfahrzeugtür entstehen, in andere, günstigere Deformationen umzuwandeln. Derartige Fallbeispiele sind unter Bezugnahme auf die Figuren 3a - 3d beschrieben, die einen zwischen der A- und B-Säule eingebrachten über jeweils fünf Fügebereiche (a-e) verfügenden Seitenaufprallträger 1 zeigen. In Figur 3a ist ein denkbar ungünstiger Verformungszustand des Seitenaufprallträgers 1 dargestellt, der sich bspw. durch einen seitlich auf die Kraftfahrzeugtür punkt- oder linienhaft einwirkenden Krafteintrag ausbildet, wie bspw. im Falle einer Kollision mit einem Pfahl. Hierbei knickt der Seitenaufprallträger 1 lediglich an einer Stelle ein und ragt maximal in den Fahrzeuginnenraum, den man sich jeweils oberhalb der A- und B-Säule vorzustellen hat.

Um die maximal in den Fahrzeuginnenraum hineinreichende Seitenaufprallträgerdeformation zu vermeiden, sieht die in Figur 3b dargestellte Situation eine gezielte Auslenkung der Gelenke a, b sowie d und e vor. Der Gelenkpunkt c verbleibt unverändert längsstabil. Der in diesem Fall seitlich auf die Kraftfahrzeugtür einwirkende Krafteintrag wird gezielt in die Fügebereiche a, b, c und e umgelenkt. Auf diese Weise dringt der Seitenaufprallträger 1 deutlich weniger weit in den Insassenbereich des Kraftfahrzeuges ein. In Figur 3c sei angenommen, dass der Seitenaufprallträger zur Wahrnehmung einer unmittelbar bevorstehenden Seitenaufprallkollision mit einem Annäherungssystem (nicht dargestellt) ausgestattet ist, so dass bereits vor Eintritt des Krafteintrages auf den Seitenaufprallträger 1 zumindest der Gelenkpunkt d eine reduzierte Biegesteifigkeit erfährt, wodurch das an ihm angebrachte Vorspannmittel den Seitenaufprallträger 1 in diesem Bereich vom Insassen weg bewegt. Der Gelenkpunkt c verbleibt starr, wobei zur gezielten Energiedissipation in den Fußraum, der eine größere Knautschzone bietet, die Gelenkpunkte a und b gezielt in ihrer Biegesteifigkeit bzw. Drehsteifigkeit reduziert werden. Die in diesem Zusammenhang gezeigte Situation verdeutlicht, dass durch intelligentes Ansteuern der Gelenkpunkte zur individuellen Einstellung ihrer Gelenkbeweglichkeit eine für den Insassen in Abhängigkeit des kollisionsbedingten Krafteintrages optimierte Verformung des Seitenaufprallträgers 1 möglich wird. Die in Figur 3d dargestellte Situation sieht einen unmittelbar vor Eintritt einer Kollision konvex aus den Insassenraum ausgewölbte Form des Seitenaufprallträgers 1 vor, durch die eine maximale Knautschzone geschaffen wird. Hierzu werden nach Feststellen einer unvermeidbaren Seitenaufprallsituation alle Gelenkpunkte a-e in ihrer Dreh- bzw. Längssteifigkeit reduziert, so dass die nicht in der Figur 3d dargestellten Vorspannmittel den Seitenaufprallträger 1 in die dargestellte konvex ausgebildete Form überführen können.

Selbstverständlich ist durch Einsatz geeigneter Aktoren innerhalb der Fügebereiche sowie die Verwendung geeigneter Wandlerwerkstoffe die Kombination des Seitenaufprallträgers mit internen passiv oder aktiv wirkenden Dämpfersystemen möglich, wodurch der physiologisch auf den Insassen einwirkende, kollisionsbedingte Energieeintrag deutlich reduziert werden kann.

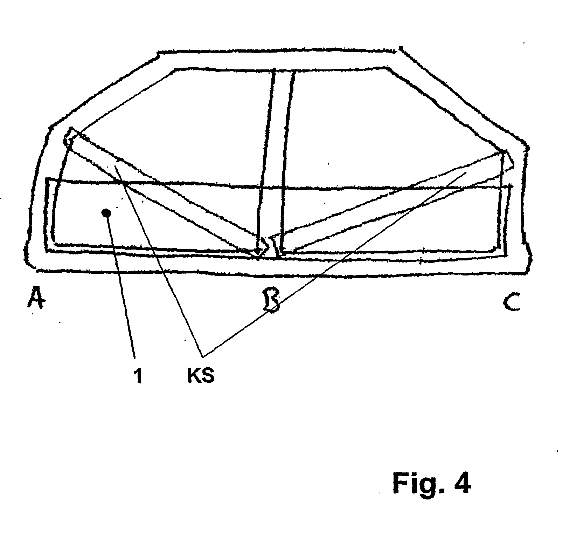

Figur 4 zeigt letztlich eine schematisierte Seitensichtdarstellung auf die vordere und hintere Tür eines Kfz, die zwischen A-, B- und C-Säule integriert sind. Konventionelle Seitenaufprallträger (KS) verlaufen diagonal innerhalb der Türen. Der erfindungsgemäß ausgebildete Seitenaufprallträger 1 hingegen verläuft vorzugsweise parallel in Fahrtrichtung innerhalb der einzelnen Kfz-Türen und ist beliebig breit bzw. hoch auszubilden, um einen möglichst optimalen Insassenschutz zu gewährleisten.

### Bezugszeichenliste

- 1: Seitenaufprallträger
- 2: Kraftfahrzeugtür
- 3: Fügebereich, Gelenkverbindung
- 4: Seitenaufprallträgerbereich
- 5: Vorspannmittel, Federelement
- 6: Durchdringungskörper
- 41,42: Seitenaufprallträgerbereich
- 43: Fingerartiger Steg

## Patentansprüche

1. Vorrichtung für ein Kraftfahrzeug zum Insassenschutz bei einem seitlich auf einen Türbereich des Kraftfahrzeuges einwirkenden Energieeintrag, wobei sich ein Fahrzeugsitz auf der dem Energieeintrag abgewandten Seite der Kraftfahrzeugtür (2) befindet, die wenigstens einen die Kraftfahrzeugtür (2) innenliegend durchragenden Seitenaufprallträger (1) vorsieht, wobei der Seitenaufprallträger (1) in Längserstreckung wenigstens zwei jeweils über einen Fügebereich (3) miteinander verbundene Bereiche (4) aufweist,
**dadurch gekennzeichnet, dass** der Fügebereich über eine in Abhängigkeit des auf die Kraftfahrzeugtür (2) einwirkenden Energieeintrages einstellbare Biegesteifigkeit verfügt, und wenigstens eine intelligente Struktur aufweist, die auf der Grundlage wenigstens eines Wandlerwerkstoffes durch externe Energiezufuhr die Biegesteifigkeit des Fügebereiches (3) verändert.

2. Vorrichtung nach Anspruch 1,
**dadurch gekennzeichnet, dass** der Fügebereich (3) in Art einer Gelenkverbindung ausgebildet ist, mit einer senkrecht zur Längserstreckung des Seitenaufprallträgers (1) orientierten Gelenkachse und einer um die Gelenkachse variabel oder diskret einstellbaren Gelenkbeweglichkeit.

3. Vorrichtung nach Anspruch 1 oder 2,
**dadurch gekennzeichnet, dass** der Wandlerwerkstoff aus wenigstens einer der nachfolgenden Werkstoffklassen besteht: Piezo-Keramik, Piezo-Polymer, elektrostriktive Keramik, elektrorheologisches Fluid, Polymergel, magnetorheologisches Fluid, Formgedächtnismetall- oder -legierung, Formgedächtnispolymer.

4. Vorrichtung nach einem der Ansprüche 1 bis 3,
**dadurch gekennzeichnet, dass** der Fügebereich (3) in einem Grundzustand ohne seitlich auf einen Türbereich des Kraftfahrzeuges einwirkenden Energieeintrag über eine hohe Biegesteifigkeit und im Kollisionsfall über die gleiche oder eine geringere Biegesteifigkeit verfügt.

5. Vorrichtung nach einem der Ansprüche 1 bis 4,
**dadurch gekennzeichnet, dass** eine Vielzahl von Fügebereichen (3) längs des Seitenaufprallträgers (1) vorgesehen ist, die einzelne Bereiche (4) des Seitenaufprallträgers (1) kettenartig miteinander verbinden, und
dass im Kollisionsfall die einzelnen Fügebereiche (3) in Abhängigkeit von Richtung und Betrag des auf die Kraftfahrzeugtür (2) einwirkenden Energiebetrages jeweils gleiche oder unterschiedliche Biegesteifigkeiten annehmen.

6. Vorrichtung nach einem der Ansprüche 1 bis 5,
**dadurch gekennzeichnet, dass** an dem Fügebereich (3) jeweils ein Vorspannmittel (5) derart vorgesehen ist, durch das bei Reduzierung der Biegesteifigkeit die an den Fügebereich (3) angrenzenden Bereiche (4) des Seitenaufprallträgers (1) in eine vom Fahrzeugsitz abgewandte Richtung auslenkbar sind.

7. Vorrichtung nach einem der Ansprüche 1 bis 6,
**dadurch gekennzeichnet, dass** der Fügebereich (3) derart ausgebildet ist, dass die Änderbarkeit der Biegesteifigkeit des Fügebereichs (3) ausschließlich durch den durch die Kollision bedingten Energieeintrag hervorrufbar ist.

8. Vorrichtung nach einem der Ansprüche 1 bis 7,
**dadurch gekennzeichnet, dass** am Kraftfahrzeug ein Annäherungssystem vorgesehen ist, und
dass bei unmittelbar bevorstehender Kollision der Fügebereich (3) mit kontrolliert zuführbarer Energie beaufschlagbar ist, durch die die Biegesteifigkeit des Fügebereich (3) gezielt einstellbar ist.

9. Vorrichtung nach einem der Ansprüche 1 bis 8,
**dadurch gekennzeichnet, dass** die wenigstens zwei Bereiche (41, 42) des Seitenaufprallträgers (1) zwei gegenüberliegende Stirnseiten vorsehen, die jeweils eine Fingerartig ausgebildete Fügekontur (43) aufweisen, die gegenseitig ineinander greifen und die von einem Druchdringungskörper (6) durchsetzt sind, dessen Längserstreckung die Drehbeweglichkeit beider Bereiche (41, 42) um den Durchdringungskörper (6) bestimmt.

10. Vorrichtung nach Anspruch 9,
**dadurch gekennzeichnet, dass** der Durchdringungskörper (6) Wandlerwerkstoff aufweist.

11. Vorrichtung nach einem der Ansprüche 1 bis 10,
**dadurch gekennzeichnet, dass** der Seitenaufprallträger (1) zwei am Randbereich der Kraftfahrzeugtür (2) jeweils gegenüberliegende Endbereiche (1l, 1r) vorsieht, die zumindest im Kollisionfall über jeweils einen Verriegelungsmechanismus mit der die Kraftfahrzeugtür (2) umgebenden Karosseriebereichen in Wirkverbindung treten.

12. Vorrichtung nach einem der Ansprüche 1 bis 11,
**dadurch gekennzeichnet, dass** die Bereiche des Seitenaufprallträgers (1) aus einem hochfesten Metall, einer Metalliegierung oder aus einem faserverstärkten Kunststoff besteht.

13. Vorrichtung nach einem der Ansprüche 1 bis 12,
**dadurch gekennzeichnet, dass** der Seitenaufprallträger im Kollisionsfall mit wenigstens zwei Abstützbereichen innerhalb der die Kraftfahrzeugtür (2) umgebenden Karosseriebereiche in Wirkverbindung tritt.

## Claims

1. Device for a motor vehicle for the protection of occupants in the event of an energy input acting laterally on a door region of the motor vehicle, wherein a vehicle seat is situated on the side of the motor vehicle door (2) which faces away from the energy input and provides at least one side impact beam (1) which passes through the motor vehicle door (2) on the inside, wherein the side impact beam (1) in its longitudinal extent has at least two regions (4) which are connected to each other in each case by means of a join region (3),
**characterised in that** the join region has a bending stiffness which can be adjusted as a function of the energy input acting on the motor vehicle door (2) and has at least one intelligent structure which changes the bending stiffness of the join region (3) by external energy supply on the basis of at least one conversion material.

2. Device according to Claim 1,
**characterised in that** the join region (3) is configured as an articulated connection, with an articulation axis which is oriented perpendicularly to the longitudinal extent of the side impact beam (1) and an articulation mobility which can be adjusted variably or discretely about the articulation axis.

3. Device according to Claim 1 or 2,
**characterised in that** the conversion material consists of at least one of the following material classes: piezoceramics, piezopolymers, electrostrictive ceramics, electrorheological fluids, polymer gels, magneto rheological fluids, memory metals or alloys, memory polymers.

4. Device according to one of Claims 1 to 3,
**characterised in that** the join region (3) has a high bending stiffness in a basic state without an energy input acting laterally on a door region of the motor vehicle and the same or a lower bending stiffness in the event of a collision.

5. Device according to one of Claims 1 to 4,
**characterised in that** a multiplicity of join regions (3) is provided along the side impact beam (1), which connect individual regions (4) of the side impact beam (1) to each other in a chain-like manner, and that in the event of a collision the individual join regions (3) in each case assume the same or different bending stiffnesses as a function of the direction and amount of the energy input acting on the motor vehicle door (2).

6. Device according to one of Claims 1 to 5,
**characterised in that** a pretensioning means (5) is provided in each case on the join region (3) in such a manner that, when the bending stiffness is reduced, the regions (4) of the side impact beam (1) which bound the join region (3) can be deflected into a direction facing away from the vehicle seat.

7. Device according to one of Claims 1 to 6,
**characterised in that** the join region (3) is configured in such a manner that the changeability of the bending stiffness of the join region (3) is brought about exclusively by the energy input caused by the collision.

8. Device according to one of Claims 1 to 7,
**characterised in that** an approach system is provided on the motor vehicle, and
that in the event of an immediately imminent collision, the join region (3) can be loaded with energy which can be supplied in a controlled manner and by means of which the bending stiffness of the join region (3) can be adjusted in a targeted manner.

9. Device according to one of Claims 1 to 8,
**characterised in that** the at least two regions (41, 42) of the side impact beam (1) provide two opposite end faces which in each case have a finger-like join contour (43) which engage in each other and are penetrated by a penetration body (6), the longitudinal extent of which defines the rotational mobility of the two regions (41, 42) around the penetration body (6).

10. Device according to Claim 9,
**characterised in that** the penetration body (6) has conversion material.

11. Device according to one of Claims 1 to 10,
**characterised in that** the side impact beam (1) provides two end regions (1l, 1r) which in each case lie opposite on the edge region of the motor vehicle door (2) and enter into a functional connection with the body regions which surround the motor vehicle door (2) by means of in each case one locking mechanism, at least in the event of a collision.

12. Device according to one of Claims 1 to 11,
**characterised in that** the regions of the side impact beam (1) consists of a high-strength metal, a metal alloy or a fibre-reinforced plastic.

13. Device according to one of Claims 1 to 12,
**characterised in that** in the event of a collision the side impact beam enters into a functional connection with at least two support regions inside the body regions which surround the motor vehicle door (2).

## Revendications

1. Dispositif pour un véhicule automobile pour la protection des passagers dans le cas d'un apport d'énergie agissant latéralement sur une zone de porte du véhicule, sur lequel un siège de véhicule se trouve sur le côté, opposé à l'apport d'énergie, de la porte du véhicule (2), lequel prévoit au moins un support d'impact latéral (1) débordant de la porte du véhicule (2) du côté intérieur, le support d'impact latéral (1) présentant dans l'extension longitudinale au moins deux zones (4) reliées l'une à l'autre respectivement au moyen d'une zone d'assemblage (3),
**caractérisé en ce que** la zone d'assemblage dispose d'une rigidité en flexion réglable en fonction de l'apport d'énergie agissant sur la porte du véhicule (2), et présente au moins une structure intelligente, qui, sur la base d'au moins un matériau convertisseur, modifie du fait de l'alimentation en énergie extérieure la rigidité en flexion de la zone d'assemblage (3).

2. Dispositif selon la revendication 1,
**caractérisé en ce que** la zone d'assemblage (3) est conçue à la façon d'une liaison articulée, avec un axe d'articulation orienté perpendiculairement à l'extension longitudinale du support d'impact latéral (1) et une mobilité d'articulation pouvant être réglée de façon variable ou discrète autour de l'axe d'articulation.

3. Dispositif selon la revendication 1 ou 2,
**caractérisé en ce que** le matériau convertisseur est à base d'au moins l'une des classes de matériau suivantes : piézo-céramique, piézo-polymère, céramique électrostrictive, fluide électrorhéologique, gel polymère, fluide magnétorhéologique, métal à mémoire de forme ou alliage de métal à mémoire de forme, polymère à mémoire de forme.

4. Dispositif selon l'une quelconque des revendications 1 à 3,
**caractérisé en ce que** la zone d'assemblage (3) dispose d'une grande rigidité en flexion dans un état de base sans apport d'énergie agissant latéralement sur une zone de porte du véhicule et en cas de collision de la même rigidité en flexion ou d'une rigidité en flexion plus faible.

5. Dispositif selon l'une quelconque des revendications 1 à 4,
**caractérisé en ce qu'**une pluralité de zones d'assemblage (3) est prévue le long du support d'impact latéral (1), les zones (4) individuelles du support d'impact latéral (1) sont reliées les unes aux autres à la façon d'une chaîne et **en ce que**, en cas de collision, les zones d'assemblage (3) individuelles présentent respectivement des rigidités en flexion identiques ou différentes en fonction de la direction et de la valeur de la valeur d'énergie agissant sur la porte du véhicule (2).

6. Dispositif selon l'une quelconque des revendications 1 à 5,
**caractérisé en ce que** qu'il est prévu sur la zone d'assemblage (3) à chaque fois un moyen de pré-tension (5) par lequel, en cas de réduction de la rigidité en flexion, les zones (4), contiguës à la zone d'assemblage (3), du support d'impact latéral (1) peuvent être déviées dans une direction opposée au siège du véhicule.

7. Dispositif selon l'une quelconque des revendications 1 à 6,
**caractérisé en ce que** la zone d'assemblage (3) est conçue de telle sorte que la variabilité de la rigidité en flexion de la zone d'assemblage (3) peut être causée exclusivement par l'apport d'énergie conditionné par la collision.

8. Dispositif selon l'une quelconque des revendications 1 à 7,
**caractérisé en ce qu'**un système d'approche est prévu sur le véhicule, et **en ce que**, dans le cas d'une collision imminente, la zone d'assemblage (3) peut être sollicitée avec de l'énergie pouvant être amenée de façon contrôlée, par laquelle la rigidité en flexion de la zone d'assemblage (3) peut être réglée de façon adéquate.

9. Dispositif selon l'une quelconque des revendications 1 à 8,
**caractérisé en ce que** les au moins deux zones (41, 42) du support d'impact latéral (1) prévoient deux côtés avant opposés, qui présentent chacun un contour d'assemblage (43) conçu à la façon d'un doigt, lesquels s'engagent réciproquement les uns dans les autres et sont traversés par un corps de pénétration (6), dont l'extension longitudinale détermine la mobilité en rotation des deux zones (41, 42) autour du corps de pénétration (6).

10. Dispositif selon la revendication 9,
**caractérisé en ce que** le corps de pénétration (6) présente du matériau convertisseur.

11. Dispositif selon l'une quelconque des revendications 1 à 10,
**caractérisé en ce que** le support d'impact latéral (1) prévoit deux zones d'extrémité (1l, 1r) se faisant face respectivement sur le bord périphérique de la porte du véhicule (2), lesquelles zones entrent en liaison active, au moins en cas de collision, au moyen de respectivement un mécanisme de verrouillage avec les zones de carrosserie entourant la porte du véhicule (2).

12. Dispositif selon l'une quelconque des revendications 1 à 11,
**caractérisé en ce que** les zones du support d'impact latéral (1) sont à base d'un métal très résistant, d'un alliage de métal ou d'une matière synthétique renforcée de fibres.

13. Dispositif selon l'une quelconque des revendications 1 à 12, **caractérisé en ce que** le support d'impact latéral (1) est en liaison active, en cas de collision, avec au moins deux zones de soutien à l'intérieur des zones de carrosserie entourant la porte du véhicule (2).
